Europäisches Patentamt

European Patent Office

Office européen des brevets

(19)

(11) Publication number: **0 074 233**
**B1**

(12) **EUROPEAN PATENT SPECIFICATION**

(45) Date of publication of patent specification: **29.07.87**

(51) Int. Cl.⁴: **C 08 L 9/06, B 60 C 1/00**

(21) Application number: **82304541.4**

(22) Date of filing: **27.08.82**

(54) **Pneumatic tires comprising an improved tread.**

(30) Priority: **27.08.81 JP 133335/81**

(43) Date of publication of application:
**16.03.83 Bulletin 83/11**

(45) Publication of the grant of the patent:
**29.07.87 Bulletin 87/31**

(84) Designated Contracting States:
**BE DE FR NL SE**

(56) References cited:
EP-A-0 048 618
EP-A-0 048 619
DE-A-2 740 572
FR-A-2 405 147
FR-A-2 411 719
FR-A-2 445 351
US-A-3 580 895
US-A-3 931 107

The file contains technical information
submitted after the application was filed and
not included in this specification

(73) Proprietor: **BRIDGESTONE TIRE COMPANY
LIMITED**
**10-1, Kyobashi 1-Chome Chuo-Ku**
**Tokyo (JP)**

(72) Inventor: **Ogawa, Masaki**
**943-43, Irumagawa**
**Sayama City (JP)**
Inventor: **Ikegami, Mikihiko**
**16-11, Nakaarai 5-Chome**
**Tokorozawa City (JP)**

(74) Representative: **Whalley, Kevin et al**
**MARKS & CLERK 57/60 Lincoln's Inn Fields**
**London WC2A 3LS (GB)**

Courier Press, Leamington Spa, England.

## Description

This invention relates to low fuel consumption tires.

Up to now, styrene-butadiene copolymer rubbers have been largely used in the treads of tires because of the excellent skid resistance under wet conditions and good wear resistance they impart to the tire. On the other hand, however, these rubbers are unsuitable for use in large tires because they have a large energy loss and tend to cause heat build-up. With the spread of expressways and motorways, it is necessary to develop rubbers having an excellent skid resistance under wet condition for use in large tires. Even in relatively small tires using the above styrene-butadiene copolymer rubber, it is a significant advantage to reduce the energy loss or rolling resistance of tires containing them. As a result, there has been a marked demand for the development of novel rubbers having an excellent wet skid resistance and a low energy loss and which are capable of being used in both large and small tires. In order to satisfy such demand, there have been developed polybutadiene rubbers or styrene-butadiene copolymer rubbers having 50 to 90% of a vinyl structure. These rubbers certainly give an improved wet skid resistance and a low fuel consumption, but lead to a considerable deterioration in properties such as wear resistance and strength at break. Therefore, when these rubbers are used to form the tread of a tire, salient wear rapidly occurs in use under slightly severe conditions, so that such tires are not suitable for general purpose use.

In order to further improve the properties of the above rubbers, we have studied the relationship between the primary properties and the properties after vulcanization of styrene-butadiene copolymer rubbers having a vinyl structure content in the butadiene portion of 25—70% by weight, and have previously proposed the development of tires using novel styrene-butadiene copolymers based on results of the above studies as a tread rubber (Japanese Patent No. 57051503 and European Patent No. 0 048 618. These tires present no problems under normal conditions of use and exhibit excellent wet skid resistance and low fuel consumption.

However, when such tires are continuously run on gravelled roads or non-paved roads, particularly on road surface with scattered acute-angled stones, cracks are produced from sipes formed on the tire tread and finally pieces of rubber are taken off from the tread so as to considerably damage the appearance of the tire and also the wear resistance is markedly impaired. At present, an occupying ratio of paved roads in Japan is relatively high, but the occupying ratio of non-paved road is not yet low, so that the above tires are not wholly suitable as low fuel consumption tires for general purpose use.

It is, therefore, an object of the invention to provide an improved pneumatic tire.

According to the invention, there is provided a pneumatic tire comprising a tread composed of a rubber composition comprising from 10 to 120 parts by weight of carbon black having an iodine adsorption number of not less than 36 mg/g and a dibutyl phthalate adsorption number of not less than 60 ml/100 g; from 0.4 to 5 parts by weight of a vulcanizing agent; and 100 parts by weight of a rubber component consisting of from 40 to 100 parts by weight of a styrene-butadiene copolymer rubber (hereinafter referred to as SBR-A) and from 0 to 60 parts by weight of at least one diene rubber other than the SBR-A; said SBR-A having a bound styrene content (S) of from 10 to 30% by weight and a 1,2-bond content in the butadiene portion (V) of from 40 to 70% by weight, and such that $65 \leq 1.7S + V \leq 100$, and the amount of styrene sequences in the SBR-A consisting of not less than 11 styrene monomer units being not more than 10% by weight of the bound styrene content and the amount of styrene sequences in the SBR-A consisting of not more than 5 styrene monomer units being not less than 80% by weight of the bound styrene content.

As is apparent from the aforementioned earlier proposals, it is necessary to reduce the molecular-weight distribution $\overline{Mw}/\overline{Mn}$ (Mw is the weight-average molecular weight and Mn is the number-average molecular weight) and increase the 1,2-bond content in the butadiene portion in order to simultaneously improve the skid resistance under wet conditions and the low fuel consumption of the SBR-A. However, when the molecular-weight distribution $(\overline{Mw}/\overline{Mn})$ is too small, the workability is reduced and irregular wear occurs. If the 1,2-bond content is increased excessively in order to compensate for this drawback, the interaction with carbon black becomes small and hence the strength at break and wear resistance of the copolymer rubber are impaired. According to the invention, therefore, the molecular-weight distribution of the SBR-A is preferably not more than 2.5 and the 1,2-bond content in the butadiene portion (V) is from 40 to 70% by weight.

As mentioned above, it is necessary to increase the 1,2-bond content in the SBR-A, which means that the bound styrene content (S) may be decreased in order to simultaneously improve the wet skid resistance and the rolling resistance as apparent from the following reasons. Here, the bound styrene content is closely related to the strength at break of the SBR-A. That is, when the content of bound styrene ranges up to about 35% by weight, if styrene is randomly distributed, the strength at break of the SBR-A increases in proportion to the bound styrene content, but the energy loss of the SBR-A becomes inversely larger with the increase of the bound styrene content. From this point, it is preferable that the bound styrene content is decreased as much as possible and is 30% by weight at maximum. On the other hand, the content of bound styrene must be at least 10% by weight considering the synergistic effect with the trans-1,4 bond content as discussed below. Therefore, the bound styrene content of the SBR-A is from 10 to 30% by weight, preferably from 15 to 25% by weight.

Furthermore, the relationship between the bound styrene content and the 1,2-bond content is a large factor contributing to the wet skid resistance and rolling resistance. In particular, the bound styrene content makes a larger contribution as compared with the 1,2-bond content and can be independently thought of because it is expressed as a weight percentage of the whole of the SBR-A. On the other hand, the 1,2-bond content is expressed as a weight percentage of the butadiene portion, which naturally varies with the bound styrene content, so that it largely depends upon the bound styrene content. For this reason, the conditions for satisfying the wet skid resistance and rolling resistance are indicated by the bound styrene content and the 1,2-bond content as a function of the bound styrene content. As a result of examinations, it has been confirmed that the above condition can be approximated by the following equation in copolymers have a bound styrene content of from 10 to 35% by weight, a 1,2-bond content in the butadiene portion of from 25 to 80% by weight:

$$65 \leq 1.7 \times \text{bound styrene content (\% by weight)} + 1,2\text{-bond content (\% by weight)} \leq 100$$

That is, the objectives of wet skid resistance and rolling resistance can both be achieved when the bound styrene and 1,2-bond contents are within the range defined in the above equation. If the value of the parameter $1.7S+V$ is less than 65, the wet skid resistance is reduced and even if other factors, such as the trans-1,4 bond content and the like, are changed the wet skid resistance is no longer improved. If the value of $1.7S+V$ exceeds 100, even if other factors are changed, the rolling resistance cannot be improved.

The trans-1,4 bonds in the butadiene portion largely contribute to the wear resistance of the copolymer rubber, that is, the increase of the trans-1,4 bond content improves the wear resistance. This phenomenon is inherent in styrene-butadiene copolymer rubbers having a relatively large 1,2-bond content and a bound styrene content of not less than 10% by weight. If the bound styrene content is less than 10% by weight or nil, in the case of a butadiene homopolymer containing no styrene, if the trans-1,4 bond content increases, the wear resistance lowers inversely. Therefore, the trans-1,4 bond content is preferably at least 20% by weight in the SBR-A to be used in the invention. Since the above phenomenon is produced by the balance to cis-1,4 bond, it is undesirable that the cis-1,4 bond content becomes excessive in order to sufficiently develop the effect of improving the wear resistance by the trans-1,4 bonds. In the SBR-A used according to the invention, therefore, it is preferable that the value obtained by subtracting the cis-1,4 bond content from the trans-1,4 bond content be not less than 5% by weight.

According to the invention, it is necessary that the amount of styrene sequences consisting of not less than 11 styrene monomer units in the SBR-A be not more than 10% by weight of the bound styrene content. If the amount of such styrene sequences, exceeds 10% by weight, not only do vibrations picked up by the tire from rugged road surfaces increase to produce an impaired ride feeling, but also locally hard portions (styrene sequences) remain in the polymer to reduce the effective surface area microscopically viewed from the ground contact area and consequently the skid-resistant properties, in particular the wet skid resistance are reduced.

In general, a rubber composition for use in the tread of a low fuel consumption tire should have a low energy loss, so that it has a small interaction with carbon black at a relatively high temperature, e.g. 50—100°C. As a result, even when used on good roads under fairly severe conditions, such rubber composition has a somewhat reduced wear resistance only but does not cause special inconvenience. However, when an input near the strength at break is applied to the tire during running on bad roads or gravelled roads, cracks rapidly grow from sipe portions of the tread and finally pieces of rubber are removed to give a surface state close to a chipping phenomenon. The latter problem can be solved by use of a countermeasure to strengthen the interaction with carbon black, but the energy loss is undesirably increased by this countermeasure.

In this connection, it has been found that when the total amount of styrene sequences consisting of not more than 5 styrene monomer units is not less than 80% of the bound styrene content in the styrene-butadiene copolymer rubber, the strength at break after vulcanization is increased to markedly improve the wear resistance and as a result the resistance to deterioration of appearance on bad roads can be considerably improved whilst retaining low energy loss. Furthermore, it has been found that the amount of styrene sequences consisting of single styrene monomer units (a structure connecting butadiene residues to each side of a styrene residue) is preferably not less than 30% by weight of the bound styrene content. That is, by improving the styrene sequence in the SBR-A as mentioned above the strength at break and wear resistance can be improved. As a result the degree of freedom in factors affecting the wet skid resistance and rolling resistance is increased, so that it is possible to develop low fuel consumption tires having improved properties.

Although an SBR-A satisfying the above requirements can be used as it is, it is preferably that SBR-A is coupled with a stannic ion by using a stannic compound such as stannic chloride or the like in order to improve the workability till the manufacture of tires. The reason why an SBR-A is coupled with the stannic ion is due to the fact that a part of the coupled copolymer is dissociated in the presence of fatty acid in the kneading to develop the dispersion effect of carbon black. In this case, the amount of portions coupled with the stannic ion is preferably from 30 to 75% by weight of SBR-A. If the amount is less than 30% by weight, the coupling effect cannot be expected, while if the ratio exceeds 75% by weight, it is difficult in practice to control the reaction due to liberation of tin in the coupling.

The Mooney viscosity before coupling of the SBR-A (measured at 100°C) is preferably from 15 to 40. If the Mooney viscosity is less than 15, the molecular weight of the SBR-A is too low and the dissociated copolymer leads to an increase of energy loss, while if the Mooney viscosity exceeds 40, the value of Mooney viscosity after the coupling becomes too high and the object of improving the workability is not achieved.

On the other hand, the Mooney viscosity after the coupling (measured at 100°C) is preferably from 45 to 90. If the value is less than 45, the low molecular weight copolymer after the dissociation increases the energy loss, while if the value exceeds 90, improvement of workability cannot be achieved.

According to the invention, the SBR-A may be used alone in a rubber composition for tire tread, but may be blended with not more than 60 parts by weight (per 40 parts by weight of SBR-A) of one or more diene rubbers other than the SBR-A, for example natural rubber, polybutadiene rubber, synthetic polyisoprene rubber, butadiene-acrylonitrile copolymer rubber, halogenated butyl rubber, butyl rubber, ethylene-propylene-diene terpolymer rubber (EPDM), nitrile-butadiene copolymer rubber, styrene-butadiene copolymer rubbers other than SBR-A and the like.

The copolymer SBR-A is basically a copolymer obtained by pursuing the objectives of wet skid resistance and low fuel consumption of the tire and is molecularly designed to give a large energy loss below room temperature and reduce the energy loss above room temperature. Therefore, the rubber composition containing SBR-A is so made that the interaction between segments of the SBR-A itself and the interaction between the SBR-A and carbon black become extremely small at temperatures above 50°C and hence the tear strength is low at temperatures above 50°C. As a result, there are no problems even when a tire comprising a tread composed of such a rubber composition is used on good roads under severe conditions, because a large tear strength is not required in such conditions of use. However, when the tire is used on gravelled roads or non-paved roads having a large number of acute-angled stones scattered thereon, cracks may produce from sipe portions of the tread and grow to remove pieces of rubber from the tread, whereby the appearance of the tread is markedly impaired and the wear resistance is also markedly reduced. In order to prevent the drawbacks of the latter case, it has been confirmed that the rubber is rendered into a high molecular weight rubber having entanglement between rubber molecules even at a temperature above 50°C. If it is intended to increase the molecular weight of the SBR-A, the interaction between segments of the copolymer rubber become inversely large and consequently the resulting rubber becomes considerably hard and its workability is reduced to an impractical degree. In this connection, it has been found that the above problem may be solved without substantially adversely affecting the wet skid resistance and low fuel consumption by blending the SBR-A with a rubber, other than the SBR-A, having a higher weight-average molecular weight and a sufficient entanglement between molecules even at a temperature above 50°C. Furthermore, it has been found that, considering compatibility with the SBR-A, a suitable other rubber having a higher weight-average molecular weight is a styrene-butadiene copolymer rubber having a bound styrene content (S) of 10 to 30% by weight and a 1,2-bond content in the butadiene portion (V) of less than 35% by weight (hereinafter referred to as SBR-B) or a polyisoprene rubber (including natural rubber).

Thus, a first preferred embodiment is a rubber blend comprising 40 to 90 parts by weight of the SBR-A and 10 to 40 parts by weight of the SBR-B, which may suitably contain not more than 50 parts by weight of a diene rubber other than a styrene-butadiene copolymer rubber. A second preferred embodiment is a rubber blend comprising 40 to 90 parts by weight of the SBR-A and 10 to 50 parts by weight of polyisoprene rubber and/or natural rubber. In order to increase the rebound resilience of the latter rubber blend, not more than 40 parts by weight of a polybutadiene rubber may suitably be added to the blend, and in this case the wet skid resistance is somewhat reduced.

In the first preferred embodiment, the bound styrene content (S) in the SBR-B is limited to 10—30% by weight because if the bound styrene content is less than 10% by weight, the strength at break of the SBR-B becomes low, while if the bound styrene content exceeds 30% by weight, the low fuel consumption is impaired. The 1.2-bond content of the butadiene portion (V) in the SBR-B is limited to less than 35% by weight because if such content is not less than 35% by weight, the same undesirable phenomenon as occurs in the SBR-A appears and the blending serves no purpose. The amount of the SBR-B in the blend is limited to 10—40 parts by weight since if the amount is less than 10 parts by weight, the no particular from blending may be expected, while if the amount is more than 40 parts by weight, the wet skid resistance and low fuel consumption cannot be simultaneously achieved.

It is preferable that the weight-average molecular weight of the SBR-B be not less than $4.0 \times 10^5$. If the weight-average molecular weight is less than $4.0 \times 10^5$, even if the SBR-B is blended with the SBR-A within a range capable of satisfying the wet skid resistance and low fuel consumption requirements at a temperature above 50°C, sufficient entanglement effect cannot be given at a temperature above 50°C and improvement of performance on bad roads cannot be achieved.

In the second preferred embodiment, the polyisoprene rubber (including natural rubber) to be blended with SBR-A preferably has a cis-1,4 bond content of not less than 90% by weight in order to prevent deterioration in low fuel consumption properties. Furthermore, the weight-average molecular weight of the polyisoprene rubber is preferably not less than $1.0 \times 10^6$, because if it is less than $1.0 \times 10^6$ even if the polyisoprene rubber is blended with SBR-A within a range capable of satisfying the wet skid resistance and low fuel consumption requirements at a temperature above 50°C, sufficient entanglement effect cannot be achieved at a temperature above 50°C and the improvement of performance on bad roads cannot be achieved. The amount of the polyisoprene rubber and/or natural rubber is from 10 to 50 parts by weight. If

4

the amount is less than 10 parts by weight, the blending effect is not expected, while if the amount is more than 50 parts by weight, the wet skid resistance and low fuel consumption cannot be simultaneously achieved.

In the pneumatic tire according to the invention, the rubber composition for use in tire tread is prepared by adding 10 to 120 parts by weight of carbon black and 0.4 to 5 parts by weight of a vulcanizing agent to 100 parts by weight of the rubber component. If the amount of carbon black is less than 10 parts by weight, the reinforcing effect is not expected, while if it exceeds 120 parts by weight, the workability of the composition in the kneading or the like is impaired. If the amount of the vulcanizing agent is less than 0.4 part by weight, the vulcanizing effect is not expected, while if it exceeds 5 parts by weight, the resulting vulcanizate is too hard and becomes impractical for use in a tread.

The carbon black has an iodine adsorption number of not less than 36 mg/g and a dibutyl phthalate adsorption number of not less than 60 ml/100 g in order to further improve the wear resistance and the reinforcing properties. As the vulcanizing agent, use may be of, for example, one or more of sulfur, p-quinonedioxime, p,p'-dibenzoylquinonedioxime, 4,4'-dithiomorpholine, poly-p-dinitrosobenzene, ammonium benzoate and alkylphenol disulfide. Among these, sulfur, 4,4'-dithiomorpholine and alkylphenol disulfide are preferably used, and the use of sulfur is most preferred.

The rubber composition for use in the tread may be compounded with usual amounts of additives usually used in the rubber industry in addition to the carbon black and vulcanizing agent. As examples of such additives, there may be mentioned inorganic fillers such as silica, bentonite, clay, titanium oxide, talc, china clay, diatomaceous earth and chalk; vulcanization accelerators such as N-oxydiethylene-2-benzothiazole sulfeneamide, di-2-benzothiazyl disulfide and N-cyclohexyl-2-benzothiazole sulfeneamide; accelerator activators such as zinc white and stearic acid; softeners such as aromatic oils; and antioxidant such as N-phenyl-N'-isopropyl-p-phenylenediamine, phenyl-naphthylamine, and 2-mercaptobenzimidazole.

The SBR-A may be produced as follows.

In a reaction vessel of 50 litre capacity are uniformly mixed, with stirring 25 kg of cyclohexane, 1.3 kg of styrene, 4.5 kg of butadiene, 0.6 g of sodium dodecylbenzenesulfonate and 3.8 g of ethylene glycol diethyl ether. After the temperature of the resulting mixture is raised to 55°C, a solution of 3.77 g of n-butyl lithium in cyclohexane is added to effect polymerization for 2 hours, during which the temperature is maintained below 60°C. To the resulting copolymer solution is added 5 g of stannic chloride, which is maintained at 45°C for 18 hours and added with 100 g of 2,6-di-t-butyl-p-cresol. Thereafter, the resulting product is subjected to a steam stripping and dried on a hot roll of 115°C, which corresponds to the SBR-A used in Example 2 as mentioned below. In this case, the 1,2-bond content can be controlled by changing the polymerization temperature, and also the trans-1,4 bond and cis-1,4 bond contents can be controlled primarily by the polymerization temperature and secondarily by changing the amounts of sodium dodecylbenzenesulfonate, ethylene glycol diethyl ether and n-butyl lithium to be added.

As the SBR-B, there may be mentioned SBR 1712 (trade name) made by Japan Synthetic Rubber Co., Ltd. (which contains 37.5 parts by weight of aromatic oil per 100 parts by weight of rubber and has a bound styrene content of 23.5% by weight, a 1,2-bond content in the butadiene portion of 19% by weight and a weight-average molecular weight of $4.8 \times 10^5$), and SBR 1714 (trade name) made by the same company (which contains 50 parts by weight of aromatic oil per 100 parts by weight of rubber and has a bound styrene content of 23.5% by weight, a 1,2-bond content in the butadiene portion of 19% by weight and a weight-average molecular weight of $7.6 \times 10^5$).

As the polyisoprene rubber, there may be mentioned natural rubber (cis-1,4 bond content not less than 98% by weight, weight-average molecular weight not less than $1.15 \times 10^6$), and IR 2200 (trade name) made by Japan Synthetic Rubber Co., Ltd. (cis-1,4 bond content 98% by weight, weight-average molecular weight $1.64 \times 10^6$).

The pneumatic tire according to the invention may be reinforced for example with organic fibre cords such as nylon, vinylon, polyester or Kevlar (trade name); or inorganic fibres such as steel, glass or carbon. Furthermore, the carcass may be of radial or bias structure, the radial structure being preferable. In particular, the rubber composition for use in a tread according to the invention can give good performance in radial tires wherein a tread portion arranged on a crown portion of the carcass has a two-laminate structure comprising a tread base rubber and a tread cap rubber. In this case, the rubber composition according to the invention may be used both as tread cap rubber and tread base rubber, but it is preferable that the rubber composition according to the invention is used only as the tread cap rubber and an other rubber having a good heat build-up is used as the tread base rubber.

According to the invention, conspicuous effect can be particularly expected in radial tires for passenger cars comprising a tread of cap/base structure though the rubber composition according to the invention is advantageously applied to large radial tires for trucks and buses comprising a tread of cap/base structure.

In the above cap/base structure, it is desirable that the ratio ($Sc/S \times 100$) of the sectional area of the tread cap rubber included in the equatorial section of the tire Sc to the total sectional area of the tread portion S is within the range of 50—90%. Preferably, the ratio Sc/s is from 55—75% in view of ease of production. When the ratio Sc/S is less than 50%, there is the fear of exposing the tread base rubber to the surface portion of the tread groove portion) due to deformation produced at the tire-vulcanizing and building steps. If the ratio Sc/S exceeds 90%, the effect of cap/base structure is not expected and the effect

5

of the rubber composition according to the invention for low fuel consumption and wet skid resistance cannot be sufficiently developed.

In order that the invention may be well understood, the following Examples are given by way of illustration only.

Example 1

37 Styrene-butadiene copolymer rubbers were provided having the properties shown in the following Table 1.

37 Rubber compositions were prepared by compounding 80 parts by weight of each of the SBR styrene-butadiene copolymer rubbers with 30 parts by weight of SBR 1714 (corresponding to 20 parts by weight of rubber content) (as SBR-B), 50 parts by weight of carbon black ISAF (made by Toyo Continental Co., Ltd., trade name CONTINEX), 2 parts by weight of stearic acid, 1 part by weight of N-phenyl-N'-isopropyl-p-phenylenediamine (made by Seiko Kagaku Co., Ltd., trade name OZONONE), 4.0 parts by weight of zinc white, 0.6 part by weight of N-oxydiethylene-2-benzothiazole sulfeneamide, 0.8 part by weight of di-2-benzothiazyl-disulfide (made by Ouchi Shinko Kagaku Kogyo Co., Ltd., trade name NOCCELER) and 1.5 parts by weight of sulfur. CONTINEX is a Registered Trade Mark.

The presence of burrs in the kneading with rolls of 10 inch (25.4 cm) diameter and the strength at break (Tb) according to JIS 6301 were measured with respect to these rubber compositions.

Each of the rubber compositions was used as a tread cap rubber of a tread with a cap/base structure to manufacture a tire having a size of 165 SR 13. In these tires, the ratio Sc/S was 60% and a rubber composition having the following compounding recipe was used as tread base rubber.

| Ingredient | Part by weight |
|---|---|
| Natural rubber | 70 |
| Polybutadiene rubber (made by Japan Synthetic Rubber Co., Ltd., trade name BR01) | 30 |
| Carbon black HAF (made by Tokai Carbon Co., Ltd., trade name SEAST 3) | 32 |
| Aromatic oil (made by Nippon Sekiyu Co., Ltd., trade name KOMOREX 700) | 2 |
| Sulfur | 2.5 |
| N-oxydiethylene-2-benzothiazyl sulfeneamide (NOCCELER MSA) | 1.8 |

The wet skid resistance, rolling resistance, wear resistance, irregular wear resistance and resistance to deterioration of appearance on bad road were evaluated with respect to the resulting tires to give the results shown in Table 1.

Various properties of the rubber and the tires were evaluated as follows.

Wet skid resistance

A vehicle provided with the test tire was run on a wet concrete road, covered in water to a depth of 3 mm, at a speed of 80 km/hr and then subjected to rapid braking at this speed, and the running distance required to completely stop the vehicle was measured. Then the wet skid resistance of the test tire was evaluated from the following equation; the tire using the styrene-butadiene copolymer of Sample No. 37 in Table 1 being the control tire:

$$\frac{(\text{Running distance of control tire})-(\text{Running distance of test tire})}{\text{Running distance of control tire}} \times 100$$

Rolling resistance

The test tire subjected to an internal pressure of 1.7 kg/cm$^2$ was run on a steel drum, which was rotated by the driving of a motor, at a speed of 120 km/hr under a JIS 100% load and then the driving of the motor was stopped to run the drum by inertia, during which the rolling resistance of the test tire was evaluated from the following equation (the control tire being the same as used in evaluating wet skid resistance):

$$\frac{(\text{Rolling resistance of control tire})-(\text{Rolling resistance of test tire})}{\text{Rolling resistance of control tire}} \times 100$$

Wear resistance

After the test tire had been run over a distance of 10,000 km, the depth of the remaining tread groove was measured to evaluate the running distance required to produce a wear loss of 1 mm. The results are given by an index on the basis that the control tire has an index value of 100. The larger the index value, the better the wear resistance.

6

Microstructure

The bound styrene content was measured by means of a spectrophotometer using a calibration curve with an absorbance of 699 cm$^{-1}$. The microstructure in the butadiene portion was measured according to D. Morero's method described in Chem. & Ind., 41, 758 (1959).

$\overline{M}w/\overline{M}n$ was measured by means of a gel permeation chromatography Model ALC/GPC-200 made by Waters Associates Inc., wherein a solution of 0.5 g of the SBR-A sample in 100 ml of tetrahydrofuran was passed through a column assembly of four double columns (length=122 cm, inner diameter=7.8 mm) each filled with a gel having a pore size of $1\times10^6$, $1\times10^6$, $1\times10^5$ or $1\times10^4$ (Styragel, trade name, made by Waters Associates Inc.) at a flow amount of 0.3 ml and a flow rate of 1 ml/min. Moreover, each molecular weight was detected by a differential refractometer attached to the GPC apparatus.

Irregular wear resistance

After the test tire had been run over a distance of 20,000 km, the presence of irregular wear was observed by checking its appearance.

Resistance to deterioration of appearance on bad roads

After the test tire had been run on roads consisting of 40% of paved roads and 60% of non-paved roads over a distance of 6,000 km, its appearance was checked. This property was evaluated on a points system, from 1 to 5, wherein the appearance of the control tire using a rubber composition based on Sample No. 37 is 5 and the appearance of the tire using a rubber composition based on Sample No. 36 is 1.

Workability

This property was evaluated by the presence of burrs on rolls of 10 inch (25.4 cm) diameter after the rubber composition had been kneaded with the rolls at a roll surface temperature of 80°C.

Distribution of styrene sequences

This was evaluated according to the method developed by Tanaka et al (Kobunshi Gakkai Yokoshu, Vol. 29, No. 7, page 2055), wherein the distribution of styrene sequence in a styrene-butadiene copolymer was measured by cleaving all the double bonds of the butadiene unit with ozone and analyzing the resulting cleaved product by means of gas permeation chromatography.

Coupling efficiency with stannic ion

From results of GPC measured under the same conditions as described from the measurement of Mw/Mn were graphed differential and integral curves of GPC (low molecular weight side is 0) after the correction of sensitivity in each molecular weight. Then, a value of the integral curve (B%) corresponding to a minimum value of the differential curve was read out on an ordinate of the graph. The coupling efficiency is indicated by a value of (100-B%).

**0 074 233**

TABLE 1(a)

| Sample No.<br>Microstructure | 1<br>Example | 2<br>Example | 3<br>Example | 4<br>Example | 5<br>Example |
|---|---|---|---|---|---|
| Content of bound styrene (% by weight) | 21.0 | 20.5 | 20.1 | 12.0 | 28.0 |
| Content of trans-1,4 bond (% by weight) | 32.0 | 30.0 | 25.0 | 26.0 | 33.0 |
| Content of cis-1,4 bond (% by weight) | 16.0 | 20.0 | 20.0 | 11.0 | 17.0 |
| Content of trans-1,4 bond– content of cis-1,4 bond (% by weight) | 16.0 | 10.0 | 5.0 | 15.0 | 16.0 |
| Content of 1,2-bond (% by weight) | 52.0 | 50.0 | 55.0 | 63.0 | 50.0 |
| 1.7×content of bound styrene+content of 1,2-bond (% by weight) | 87.7 | 84.9 | 89.2 | 83.4 | 97.6 |
| Amount of styrene sequence consisting of 11 or more styrene monomer units (% by weight) | 4.5 | 4.7 | 3.2 | 5.6 | 3.4 |
| Amount of styrene sequence consisting of 5 or less styrene monomer units (% by weight) | 82 | 85 | 82 | 86 | 88 |
| Amount of styrene sequence consisting of single styrene monomer unit (% by weight) | 39 | 40 | 41 | 37.5 | 41.0 |
| $\overline{M}w/\overline{M}n$ | 1.71 | 1.75 | 1.63 | 1.82 | 1.93 |
| Presence of coupling | absence | presence | presence | presence | presence |
| Mooney viscosity before coupling (100°C) | — | 27 | 28 | 25 | 27 |
| Mooney viscosity after coupling (100°C) | 60 | 65 | 65 | 60 | 63 |
| Coupling efficiency (%) | — | 48 | 46 | 49 | 43 |
| Resistance to deterioration of appearance on bad road | 5 | 5 | 5 | 5 | 5 |
| Workability | absence | absence | absence | absence | absence |
| Strength at break (kg/cm²) | 215 | 233 | 225 | 220 | 251 |
| Wet skid resistance | 12 | 10 | 14 | 10 | 15 |
| Rolling resistance (%) | 18 | 25 | 23 | 18 | 3 |
| Wear resistance (index value) | 110 | 112 | 106 | 112 | 131 |
| Irregular wear resistance | absence | absence | absence | absence | absence |

8

# 0 074 233

TABLE 1(b)

| Sample No. Microstructure | 6 | 7 | 8 | 9 | 10 |
|---|---|---|---|---|---|
| | Example | Example | Example | Example | Example |
| Content of bound styrene (% by weight) | 17.0 | 15.0 | 13.0 | 20.0 | 20.0 |
| Content of trans-1,4 bond (% by weight) | 22.0 | 21.0 | 34.0 | 28.0 | 29.0 |
| Content of cis-1,4 bond (% by weight) | 13.0 | 11.0 | 20.0 | 11.0 | 18.0 |
| Content of trans-1,4 bond– content of cis-1,4 bond (% by weight) | 9.0 | 10.0 | 14.0 | 17.0 | 11.0 |
| Content of 1,2-bond (% by weight) | 65.0 | 68.0 | 46.0 | 61.0 | 53.0 |
| 1.7×content of bound styrene+content of 1,2-bond (% by weight) | 93.9 | 93.5 | 68.0 | 95.0 | 87.0 |
| Amount of styrene sequence consisting of 11 or more styrene monomer units (% by weight) | 3.9 | 2.4 | 2.2 | 2.4 | 9.0 |
| Amount of styrene sequence consisting of 5 or less styrene monomer units (% by weight) | 83.5 | 81.6 | 83.5 | 86.2 | 90.2 |
| Amount of styrene sequence consisting of single styrene monomer unit (% by weight) | 39.0 | 38.6 | 35 | 38.2 | 38 |
| $\overline{M}w/\overline{M}n$ | 1.58 | 1.55 | 1.85 | 1.68 | 1.82 |
| Presence of coupling | presence | presence | presence | presence | presence |
| Mooney viscosity before coupling (100°C) | 26 | 24 | 24 | 26 | 25 |
| Mooney viscosity after coupling (100°C) | 62 | 62 | 58 | 62 | 60 |
| Coupling efficiency (%) | 43.5 | 47 | 43 | 44 | 45 |
| Resistance to deterioration of appearance on bad road | 5 | 5 | 5 | 5 | 5 |
| Workability | absence | absence | absence | absence | absence |
| Strength at break (kg/cm$^2$) | 210 | 211 | 218 | 236 | 241 |
| Wet skid resistance | 13 | 16 | 10 | 22 | 14 |
| Rolling resistance (%) | 24 | 24 | 26 | 18 | 21 |
| Wear resistance (index value) | 103 | 108 | 117 | 127 | 104 |
| Irregular wear resistance | absence | absence | absence | absence | absence |

9

0 074 233

TABLE 1(c)

| Sample No. / Microstructure | 11 Example | 12 Example | 13 Example | 14 Example | 15 Example |
|---|---|---|---|---|---|
| Content of bound styrene (% by weight) | 20.0 | 20.0 | 20.0 | 20.0 | 20.0 |
| Content of trans-1,4 bond (% by weight) | 30.0 | 31.0 | 30.0 | 29.0 | 29.0 |
| Content of cis-1,4 bond (% by weight) | 17.0 | 16.0 | 15.0 | 17.0 | 16.0 |
| Content of trans-1,4 bond– content of cis-1,4 bond (% by weight) | 13.0 | 15.0 | 15.0 | 12.0 | 13.0 |
| Content of 1,2-bond (% by weight) | 53.0 | 53.0 | 55.0 | 54.0 | 55.0 |
| 1.7×content of bound styrene+content of 1,2-bond (% by weight) | 87.0 | 87.0 | 89.0 | 88.0 | 89.0 |
| Amount of styrene sequence consisting of 11 or more styrene monomer units (% by weight) | 3.5 | 3.3 | 4.3 | 3.2 | 2.8 |
| Amount of styrene sequence consisting of 5 or less styrene monomer units (% by weight) | 96.0 | 83.0 | 82 | 85.5 | 93.0 |
| Amount of styrene sequence consisting of single styrene monomer unit (% by weight) | 42 | 25 | 33 | 35 | 42.2 |
| $\overline{M}w/\overline{M}n$ | 1.93 | 1.73 | 1.50 | 2.4 | 1.72 |
| Presence of coupling | presence | presence | presence | presence | presence |
| Mooney viscosity before coupling (100°C) | 26 | 26 | 26 | 25 | 16 |
| Mooney viscosity after coupling (100°C) | 60 | 59 | 59 | 59 | 50 |
| Coupling efficiency (%) | 43 | 42 | 43 | 43 | 60 |
| Resistance to deterioration of appearance on bad road | 5 | 5 | 5 | 5 | 5 |
| Workability | absence | absence | absence | absence | absence |
| Strength at break (kg/cm$^2$) | 256 | 225 | 218 | 230 | 253 |
| Wet skid resistance | 12 | 14 | 19 | 5 | 13 |
| Rolling resistance (%) | 18 | 18 | 26 | 8 | 16 |
| Wear resistance (index value) | 129 | 120 | 118 | 115 | 105 |
| Irregular wear resistance | absence | absence | absence | absence | absence |

10

TABLE 1(d)

| Sample No.<br>Microstructure | 16 | 17 | 18 | 19 | 20 |
|---|---|---|---|---|---|
| | Example | Example | Example | Example | Example |
| Content of bound styrene (% by weight) | 21.0 | 21.0 | 20.0 | 20.0 | 20.0 |
| Content of trans-1,4 bond (% by weight) | 25.0 | 28.0 | 26.0 | 28.0 | 31.0 |
| Content of cis-1,4 bond (% by weight) | 19.0 | 16.0 | 17.0 | 17.0 | 15.0 |
| Content of trans-1,4 bond–content of cis-1,4 bond (% by weight) | 6.0 | 12.0 | 9.0 | 11.0 | 16.0 |
| Content of 1,2-bond (% by weight) | 56.0 | 56.0 | 57.0 | 55.0 | 54.0 |
| 1.7×content of bound styrene+content of 1,2-bond (% by weight) | 91.7 | 91.7 | 91.0 | 89.0 | 88.0 |
| Amount of styrene sequence consisting of 11 or more styrene monomer units (% by weight) | 3.5 | 3.3 | 4.1 | 3.2 | 3.1 |
| Amount of styrene sequence consisting of 5 or less styrene monomer units (% by weight) | 85.0 | 84.5 | 86.9 | 90.1 | 84.5 |
| Amount of styrene sequence consisting of single styrene monomer unit (% by weight) | 35.0 | 38.6 | 36.6 | 38.5 | 36.5 |
| $\overline{M}w/\overline{M}n$ | 1.83 | 1.99 | 1.48 | 1.68 | 1.59 |
| Presence of coupling | presence | presence | presence | presence | presence |
| Mooney viscosity before coupling (100°C) | 38 | 20 | 35 | 24 | 21 |
| Mooney viscosity after coupling (100°C) | 69 | 46 | 85 | 51 | 67 |
| Coupling efficiency (%) | 31 | 39 | 60 | 32 | 70 |
| Resistance to deterioration of appearance on bad road | 5 | 5 | 5 | 5 | 5 |
| Workability | absence | absence | absence | absence | absence |
| Strength at break (kg/cm$^2$) | 235 | 238 | 214 | 233 | 244 |
| Wet skid resistance | 14 | 11 | 17 | 11 | 14 |
| Rolling resistance (%) | 12 | 10 | 28 | 25 | 23 |
| Wear resistance (index value) | 113 | 102 | 124 | 112 | 118 |
| Irregular wear resistance | absence | absence | absence | absence | absence |

**0 074 233**

TABLE 1(e)

| Sample No. / Microstructure | 21 Example | 22 Example | 23 Example | 24 Example | 25 Example |
|---|---|---|---|---|---|
| Content of bound styrene (% by weight) | 20.0 | 20.0 | 20.0 | 21.0 | 21.2 |
| Content of trans-1,4 bond (% by weight) | 30.0 | 32.0 | 28.0 | 28.0 | 25.0 |
| Content of cis-1,4 bond (% by weight) | 17.0 | 14.0 | 17.0 | 16.0 | 22.0 |
| Content of trans-1,4 bond– content of cis-1,4 bond (% by weight) | 13.0 | 18.0 | 11.0 | 12.0 | 3.0 |
| Content of 1,2 bond (% by weight) | 53.0 | 54.0 | 55.0 | 56.0 | 53.0 |
| 1.7×content of bound styrene+content of 1,2-bond (% by weight) | 87.0 | 88.0 | 89.0 | 91.7 | 89.0 |
| Amount of styrene sequence consisting of 11 or more styrene monomer units (% by weight) | 2.8 | 2.5 | 3.3 | 2.6 | 2.8 |
| Amount of styrene sequence consisting of 5 or less styrene monomer units (% by weight) | 86.2 | 81.6 | 90.5 | 92.5 | 86.0 |
| Amount of styrene sequence consisting of single styrene monomer unit (% by weight) | 35.4 | 42.5 | 43.8 | 53.0 | 37.0 |
| $\overline{M}w/\overline{M}n$ | 1.88 | 1.49 | 1.63 | 1.66 | 1.82 |
| Presence of coupling | presence | absence | absence | presence | presence |
| Mooney viscosity before coupling (100°C) | 23 | — | — | 25 | 28 |
| Mooney viscosity after coupling (100°C) | 72 | 58 | 60 | 60 | 63 |
| Coupling efficiency (%) | 73 | — | — | 46 | 44 |
| Resistance to deterioration of appearance on bad road | 5 | 5 | 5 | 5 | 5 |
| Workability | absence | absence | absence | absence | absence |
| Strength at break (kg/cm$^2$) | 242 | 205 | 208 | 252 | 239 |
| Wet skid resistance | 10 | 15 | 12 | 16 | 10 |
| Rolling resistance (%) | 26 | 18 | 19 | 18 | 18 |
| Wear resistance (index value) | 120 | 115 | 106 | 121 | 96 |
| Irregular wear resistance | absence | absence | absence | absence | absence |

12

# 0 074 233

TABLE 1(f)

| Microstructure / Sample No. | 26 | 27 | 28 | 29 | 30 |
|---|---|---|---|---|---|
| | Comparative Example | Comparative Example | Example | Comparative Example | Comparative Example |
| Content of bound styrene (% by weight) | 9.5 | 32.0 | 15.0 | 25.0 | 14.0 |
| Content of trans-1,4 bond (% by weight) | 21.0 | 36.0 | 18.0 | 36.0 | 18.0 |
| Content of cis-1,4 bond (% by weight) | 13.0 | 21.0 | 13.0 | 26.0 | 7.0 |
| Content of trans-1,4 bond– content of cis-1,4 bond (% by weight) | 8.0 | 17.0 | 5.0 | 10.0 | 13.0 |
| Content of 1,2-bond (% by weight) | 66.0 | 43.0 | 69.0 | 38.0 | 85.0 |
| 1.7×content of bound styrene+content of 1,2-bond (% by weight) | 82.2 | 97.4 | 94.5 | 80.5 | 98.8 |
| Amount of styrene sequence consisting of 11 or more styrene monomer units (% by weight) | 9.6 | 2.8 | 3.1 | 2.5 | 3.1 |
| Amount of styrene sequence consisting of 5 or less styrene monomer units (% by weight) | 88 | 86 | 86.5 | 85.6 | 86.9 |
| Amount of styrene sequence consisting of single styrene monomer unit (% by weight) | 31.0 | 40.0 | 38.0 | 39.5 | 86.9 |
| $\overline{M}w/\overline{M}n$ | 1.63 | 1.96 | 1.72 | 1.45 | 1.77 |
| Presence of coupling | presence | presence | presence | presence | presence |
| Mooney viscosity before coupling (100°C) | 30 | 28 | 25 | 22 | 25 |
| Mooney viscosity after coupling (100°C) | 67 | 69 | 60 | 60 | 61 |
| Coupling efficiency (%) | 45 | 53 | 45 | 52 | 43 |
| Resistance to deterioration of appearance on bad road | 5 | 5 | 5 | 5 | 5 |
| Workability | absence | absence | absence | presence | absence |
| Strength at break (kg/cm$^2$) | 199 | 241 | 193 | 240 | 191 |
| Wet skid resistance | −2 | 20 | 11 | −2 | 20 |
| Rolling resistance (%) | 22 | −10 | 24 | 16 | −1 |
| Wear resistance (index value) | 95 | 125 | 90 | 115 | 98 |
| Irregular wear resistance | absence | absence | absence | presence | absence |

13

TABLE 1(g)

| Microstructure | Sample No. 31 | 32 | 33 | 34 | 35 |
|---|---|---|---|---|---|
| | Comparative Example | Comparative Example | Comparative Example | Comparative Example | Comparative Example |
| Content of bound styrene (% by weight) | 13.0 | 23.0 | 21.0 | 20.0 | 18.0 |
| Content of trans-1,4 bond (% by weight) | 36.0 | 26.0 | 28.0 | 29.0 | 27.0 |
| Content of cis-1,4 bond (% by weight) | 23.0 | 11.0 | 17.0 | 15.0 | 19.0 |
| Content of trans-1,4 bond– content of cis-1,4 bond (% by weight) | 13.0 | 15.0 | 11.0 | 14.0 | 8.0 |
| Content of 1,2-bond (% by weight) | 41.0 | 63.0 | 55.0 | 56.0 | 54.0 |
| 1.7×content of bound styrene+content of 1,2-bond (% by weight) | 63.1 | 102.1 | 90.7 | 90.0 | 88.0 |
| Amount of styrene sequence consisting of 11 or more styrene monomer units (% by weight) | 25 | 26 | 11.0 | 13.0 | 3.2 |
| Amount of styrene sequence consisting of 5 or less styrene monomer units (% by weight) | 89.9 | 89.4 | 78.0 | 76.0 | 75 |
| Amount of styrene sequence consisting of single styrene monomer unit (% by weight) | 38.6 | 36.2 | 35.0 | 35.0 | 31 |
| $\overline{M}w/\overline{M}n$ | 1.73 | 2.01 | 2.14 | 1.69 | 1.83 |
| Presence of coupling | presence | presence | presence | presence | presence |
| Mooney viscosity before coupling (100°C) | 22 | 25 | 26 | 25 | 27 |
| Mooney viscosity after coupling (100°C) | 56 | 60 | 59 | 66 | 60 |
| Coupling efficiency (%) | 47 | 45 | 46 | 56 | 65.5 |
| Resistance to deterioration of appearance on bad road | 5 | 5 | 3 | 2 | 2 |
| Workability | absence | absence | absence | absence | absence |
| Strength at break (kg/cm²) | 225 | 238 | 198 | 189 | 200 |
| Wet skid resistance | −3 | 24 | −6 | −8 | −2 |
| Rolling resistance (%) | 7 | −6 | 10 | 5 | 13 |
| Wear resistance (index value) | 114 | 121 | 88 | 91 | 92 |
| Irregular wear resistance | absence | absence | absence | absence | absence |

14

# 0 074 233

TABLE 1(h)

| Microstructure \ Sample No. | 36 Comparative Example | 37 Control |
|---|---|---|
| Content of bound styrene (% by weight) | 18.0 | 23.5 |
| Content of trans-1,4 bond (% by weight) | 22.0 | 66.0 |
| Content of cis-1,4 bond (% by weight) | 20.0 | 15.0 |
| Content of trans-1,4 bond– content of cis-1,4 bond (% by weight) | 2.0 | 51.0 |
| Content of 1,2-bond (% by weight) | 58.0 | 19.0 |
| 1.7×content of bound styrene+content of 1,2-bond (% by weight) | 88.6 | 34.8 |
| Amount of styrene sequence consisting of 11 or more styrene monomer units (% by weight) | 1.9 | 2.0 |
| Amount of styrene sequence consisting of 5 or less styrene monomer units (% by weight) | 68.0 | 93.5 |
| Amount of styrene sequence consisting of single styrene monomer unit (% by weight) | 21.0 | 52.5 |
| $\overline{M}w/\overline{M}n$ | 1.68 | 3.5 |
| Presence of coupling | absence | absence |
| Mooney viscosity before coupling (100°C) | — | — |
| Mooney viscosity after coupling (100°C) | 60 | 52 |
| Coupling efficiency (%) | — | — |
| Resistance to deterioration of appearance on bad road | 1 | 5 |
| Workability | absence | absence |
| Strength at break (kg/cm$^2$) | 178 | 230 |
| Wet skid resistance | 11 | 0 |
| Rolling resistance (%) | 2 | 0 |
| Wear resistance (index value) | 68 | 100 |
| Irregular wear resistance | absence | absence |

15

As is apparent from the data given in Table 1, the tires using an SBR-A according to the invention have good properties.

Example 2

Nine rubber compositions shown in the following Tables 2 and 3 were prepared and the workability and strength at break thereof were evaluated in the same manner as described in Example 1. Then, each of these rubber compositions was used as the tread cap rubber of a tread with a cap/base structure together with the same tread base rubber as described in Example 1, the ratio Sc/S being 70%, to manufacture a tire. The wet skid resistance, rolling resistance, wear resistance, irregular wear resistance and resistance to deterioration of appearance on bad roads were evaluated with respect to the resulting tires to give the results shown in Tables 2 and 3.

As apparent from the data given in Tables 2 and 3, the pneumatic tires according to the invention have good properties as compared with the tires of the Comparative Examples.

16

TABLE 2

| Sample No.<br><br>Microstructure | 38<br><br>Comparative Example | 39<br><br>Example | 40<br><br>Example | 41<br><br>Example | 42<br><br>Example |
|---|---|---|---|---|---|
| SBR-B (SBR 1712*) | 65 | 40 | 20 | 10 | — |
| Polybutadiene rubber BR01 | — | — | — | — | — |
| Natural rubber | — | — | — | 15 | — |
| SBR-A (Sample No. 18) | 35 | 60 | 80 | 75 | 100 |
| Carbon black HAF | 47 | 47 | 47 | 47 | 47 |
| Aromatic oil | 8 | 8 | 8 | 8 | 8 |
| N-phenyl-N'-isopropyl-p-phenylene-diamine | 1 | 1 | 1 | 1 | 1 |
| Stearic acid | 2 | 2 | 2 | 2 | 2 |
| Zinc white | 4 | 4 | 4 | 4 | 4 |
| N-oxydiethylene-2-benzothiazole-sulfeneamide | 1.0 | 1.0 | 1.0 | 1.0 | 1.0 |
| di-2-benzothiazylsulfide | 0.2 | 0.2 | 0.2 | 0.2 | 0.2 |
| p-amylphenol disulfide | 2.0 | 2.0 | 2.0 | 2.0 | 2.0 |
| Resistance to deterioration of appearance on bad road | 5 | 5 | 5 | 5 | 3 |
| Workability | absence | absence | absence | absence | absence |
| Strength at break | 243 | 244 | 228 | 235 | 211 |
| Wet skid resistance | −3 | +11 | +15 | +12 | +15 |
| Rolling resistance | 0 | +20 | +25 | +27 | +12 |
| Wear resistance | 98 | 105 | 120 | 122 | 121 |
| Irregular wear resistance | absence | absence | absence | absence | absence |

*SBR 1712 contains 37.5 phr of aromatic oil per 100 phr of rubber.

In Table 2, each compounding amount is expressed by a numerical value in terms of rubber content and the amount of aromatic oil is a gross amount in the composition.

TABLE 3

| Sample No.<br>Microstructure | 43<br>Compara-<br>tive<br>Example | 44<br>Example | 45<br>Example | 46<br>Example |
|---|---|---|---|---|
| Polybutadiene BR01 | — | — | — | 10 |
| Natural rubber | 65 | 40 | 15 | 30 |
| SBR-A (Sample No. 18) | 35 | 60 | 85 | 60 |
| Carbon black HAF | 50 | 50 | 50 | 50 |
| Aromatic oil | 10 | 10 | 10 | 10 |
| N-phenyl-N'-isopropyl-p-phenylene diamine | 1 | 1 | 1 | 1 |
| Stearic acid | 2 | 2 | 2 | 2 |
| Zinc white | 4 | 4 | 4 | 4 |
| N-oxydiethylene-2-benzothiazole-sulfeneamide | 0.7 | 0.7 | 0.7 | 0.7 |
| di-2-benzothiazylsulfide | 0.2 | 0.2 | 0.2 | 0.2 |
| p-amylphenol disulfide | 2.0 | 2.0 | 2.0 | 2.0 |
| | | | | |
| Resistance to deterioration of appearance on bad road | 5 | 5 | 5 | 5 |
| Workability | absence | absence | absence | absence |
| Strength at break | 255 | 245 | 242 | 241 |
| Wet skid resistance | −4 | +12 | +22 | +11 |
| Rolling resistance | +9 | +27 | +21 | +25 |
| Wear resistance | 98 | 100 | 109 | 104 |
| Irregular wear resistance | absence | absence | absence | absence |

Example 3

Five SBR series rubber compositions were prepared using the SBR-A of Sample No. 18 of Table 1 and five types of SBR-B as shown in the following Table 4 in the compounding recipe given below. Similarly, five polyisoprene series rubber compositions were prepared using the SBR-A of Sample No. 18 of Table 1 and natural rubber or four types of polyisoprene rubber as shown in Table 4 in the compounding recipe given below.

| SBR series rubber composition | | Polyisoprene series rubber composition | |
|---|---|---|---|
| Ingredient | Part by weight | Ingredient | Part by weight |
| Sample No. 18 | 80 | Sample No. 18 | 70 |
| SBR-B *1 | 20 | Polyisoprene rubber | 30 |
| N-339 *2 | 48 | N-339 | 50 |
| Aromatic oil *3 | 10 | Aromatic oil | 10 |
| 810 NA *4 | 1 | 810.NA | 1 |
| ZnO | 4 | ZnO | 4 |
| DM | 0.2 | DM | 0.2 |
| Nobs *5 | 0.7 | Nobs | 0.6 |
| Sulfur | 1.5 | Sulfur | 1.75 |

Note) *1 In case of oil extended SBR, the rubber content was 20 parts by weight.
*2 carbon black
*3 In case of oil extended SBR, the amount of aromatic oil was based on the total amount of the rubber composition.
*4 trade name of N-phenyl-N'-isopropyl-p-phenylenediamine, made by Ouchi Shinko Kagaku Co., Ltd.
*5 trade name of N-oxyethylene-2-benzothiazyl sulfeneamide, made by Ouchi Shinko Kagaku Co., Ltd.

Each of the SBR series rubber compositions (Sample Nos. 47—51) and polyisoprene series rubber compositions (Sample Nos. 52—57) was used to manufacture a tire in the same manner as described in Example 1. The strength at break of the rubber composition and the properties of the tire were evaluated to give the results shown in Table 4.

TABLE 4(a)

| Sample No. / Microstructure | 47 | 48 | 49 | 50 | 51 |
|---|---|---|---|---|---|
| | Example | Example | Example | Example | Example |
| SBR-B or polyisoprene (IR) | SBR | SBR | SBR | SBR | SBR |
| Content of bound styrene (% by weight) | 23.5 | 23.5 | 23.5 | 18 | 25 |
| Content of 1,2-bond or 3,4-bond | 19 | 19 | 19 | 12 | 32 |
| Content of cis-1,4 bond | 14 | 15 | 15 | 38 | 27 |
| Weight-average molecular weight ($\times 10^5$) | 7.6 | 4.8 | 3.5 | 2.6 | 5.0 |
| Trade name | SBR 1714 | SBR 1712 | SBR 1500 | SBR 1000 | |
| Maker | JSR* | JSR | JSR | Ashahi Kasei Kogyo K.K. | |
| | | | | | |
| Resistance to deterioration of appearance on bad road | 5 | 5 | 4 | 3 | 5 |
| Workability | absence | absence | absence | absence | absence |
| Strength at break (kg/cm$^2$) | 218 | 215 | 210 | 221 | 223 |
| Wet skid resistance | 18 | 18 | 16 | 7 | 20 |
| Rolling resistance (%) | 29 | 27 | 28 | 30 | 21 |
| Wear resistance (index value) | 119 | 118 | 110 | 105 | 109 |
| Irregular wear resistance | absence | absence | absence | absence | absence |

*JSR is Japan Synthetic Rubber Co., Ltd.

# 0 074 233

TABLE 4(b)

| Sample No. / Microstructure | 52 | 53 | 54 | 56 | 57 |
|---|---|---|---|---|---|
| | Example | Example | Example | Example | Example |
| SBR-B or polyisoprene (IR) | Natural rubber | IR | IR | IR | IR |
| Content of bound styrene (% by weight) | — | — | — | — | — |
| Content of 1,2-bond or 3,4-bond | 1 | 2.0 | 1.5 | 5.0 | 8 |
| Content of cis-1,4 bond | 99 | 98.0 | 98.5 | 84.8 | 92 |
| Weight-average molecular weight ($\times 10^5$) | 11.5 | 16.4 | 16.5 | 25.6 | 0.5 |
| Trade name | | IR 2200 | IR 10 | KARIFLEX 305 | LIR 50 |
| Maker | | JSR | Kuraray Co., Ltd. | | Kuraray Co., Ltd. |
| Resistance to deterioration of appearance on bad road | 5 | 5 | 5 | 4 | 3 |
| Workability | absence | absence | absence | absence | absence |
| Strength at break (kg/cm$^2$) | 235 | 228 | 233 | 212 | 201 |
| Wet skid resistance | 12 | 13 | 15 | 22 | 25 |
| Rolling resistance (%) | 27 | 27 | 26 | −1 | 6 |
| Wear resistance (index value) | 105 | 101 | 101 | 103 | 99 |
| Irregular wear resistance | absence | absence | absence | absence | absence |

## Claims

1. A pneumatic tire comprising a tread composed of a rubber composition comprising from 10 to 120 parts by weight of carbon black having an iodine adsorption number of not less than 36 mg/g and a dibutyl phthalate adsorption number of not less than 60 ml/100 g; from 0.4 to 5 parts by weight of a vulcanizing agent; and 100 parts by weight of a rubber component consisting of from 40 to 100 parts by weight of a first styrene butadiene copolymer rubber and from 0 to 60 parts by weight of one or more diene rubbers other than said first styrene-butadiene copolymer rubber the first styrene-butadiene copolymer rubber having a bound styrene content (S) of from 10 to 30% by weight and a 1,2-bond content in the butadiene portion (V) of from 40 to 70% by weight, such that $65 \leq 1.7S+V \leq 100$, and containing not more than 10% by weight, based on the weight of bound styrene, of styrene sequences consisting of not less than 11 styrene monomer units and not less than 80% by weight, based on the weight of bound styrene, of styrene sequences consisting of not more than 5 styrene monomer units.

2. A pneumatic tire as claimed in claim 1, in which the other diene rubber is a natural rubber, polybutadiene rubber, synthetic polyisoprene rubber, butadiene acrylonitrile copolymer rubber, butyl rubber, halogenated butyl rubber, ethylene-propylene-diene terpolymer rubber, nitrile-butadiene copolymer rubber or a styrene-butadiene copolymer rubber other than the first styrene-butadiene copolymer rubber.

3. A pneumatic tire as claimed in claim 1 or claim 2 in which the rubber component consists of from 40 to 90 parts by weight of the first styrene-butadiene copolymer rubber, from 10 to 40 parts by weight of a styrene-butadiene copolymer rubber having a bound styrene content of from 10 to 30% by weight and a 1,2-bond content in the butadiene portion of less than 35% by weight and from 0 to 50 parts by weight of a diene rubber other than said styrene-butadiene copolymer rubbers.

21

# 0 074 233

4. A pneumatic tire as claimed in claim 3 in which the other styrene-butadiene copolymer rubber has a weight-average molecular weight of not less than $4.0 \times 10^5$.

5. A pneumatic tire as claimed in claim 1 or claim 2 in which the rubber component consists of from 40 to 90 parts by weight of the first styrene-butadiene copolymer rubber, from 10 to 50 parts by weight of a polyisoprene rubber and/or natural rubber and from 0 to 40 parts by weight of polybutadiene.

6. A pneumatic tire as claimed in claim 5 in which the polyisoprene rubber has a cis-1,4 bond content of not less than 90% by weight and a weight-average molecular weight of not less than $1.0 \times 10^6$.

7. A pneumatic tire as claimed in any one of the preceding claims in which the first styrene-butadiene copolymer rubber contains not less than 30% by weight, based on the weight of bound styrene, of styrene sequences consisting of a single styrene monomer unit.

8. A pneumatic tire as claimed in any one of the preceding claims in which the trans-1,4 bond content in the butadiene portion of the first styrene-butadiene copolymer rubber is not less than 20% by weight.

9. A pneumatic tire as claimed in any one of the preceding claims in which the value obtained by subtracting the weight percentage content of cis-1,4 bonds in the butadiene portion from the content of trans-1,4 bonds in the butadiene portion of the first styrene-butadiene copolymer rubber is not less than 5% by weight.

10. A pneumatic tire as claimed in any one of the preceding claims in which the first styrene-butadiene copolymer rubber has a ratio of weight-average molecular weight to number-average molecular weight of not more than 2.5.

11. A pneumatic tire as claimed in any one of the preceding claims in which the first styrene-butadiene copolymer rubber is coupled with a stannic ion.

12. A pneumatic tire as claimed in claim 11 in which stannic chloride is used as stannic ion.

13. A pneumatic tire as claimed in claim 11 or claim 12 in which the coupled first styrene-butadiene copolymer rubber has a Mooney viscosity (at 100°C) of from 45 to 90.

14. A pneumatic tire as claimed in any one of claims 11 to 13 in which stannic ion coupled portion in the first styrene-butadiene copolymer rubber SBR-A forms from 30 to 75% by weight of the SBR-A.

15. A pneumatic tire as claimed in any one of the preceding claims in which the vulcanizing agent is sulfur, p-quinonedioxime, p,p'-dibenzoylquinonedioxime, 4,4'-dithiodimorpholine, poly-p-dinitrosobenzene, ammonium benzoate or an alkylphenol disulfide.


## Patentansprüche

1. Luftreifen mit einer Lauffläche aus einer Gummimischung enthaltend 10 bis 120 Gew.-Teile Ruß mit einer Iodaufnahmezahl von nicht weniger als 36 mg/g und einer Dibutylphthalat-Aufnahmezahl von nicht weniger als 60 ml/100 g, 0,4 bis 5 Gew.-Teile eines Vulkanisationsmittels und 100 Gew.-Teile einer Kautschuk-Komponente, bestehend aus 40 bis 100 Gew.-Teilen eines ersten Styrol/Butadien-Copolymeren und 0 bis 60 Gew.-Teilen eines oder mehrerer Dien-Kautschuke—anders als das erste Copolymere, wobei im ersten Styrol/Butadien-Copolymeren der Anteil an gebundenem Styrol (S) 10 bis 30 Gew.-% und der Anteil an 1,2-Bindung im Butadienteil (V) 40 bis 70 Gew.-% beträgt, so daß die Beziehung gilt: $65 \leqq 1,7S+V \leqq 100$, und nicht mehr als 10 Gew.-% Styrolsequenzen, bezogen auf das Gewicht der gebundenen Styroleinheiten aus nicht weniger als 11 Styrolmonomer-Einheiten und nicht weniger als 80 Gew.-% Styrolsequenzen—bezogen auf das Gewicht der gebundenen Styroleinheiten—aus nicht mehr als 5 Styrolmonomer-Einheiten bestehen.

2. Luftreifen nach Anspruch 1, bei dem der weitere Dien-Kautschuk ein Naturkautschuk, Polybutadienkautschuk, synthetischer Polyisoprenkautschuk, Butadien/Acrylnitril-Copolymer, Butylkautschuk, halogenierter Butylkautschuk, Ethylen/Propylen/Dien-Terpolymerkautschuk, Nitril/Butadien-Copolymerkautschuk oder Styrol/Butadien-Copolymerkautschuk, verschieden von dem ersten Copolymeren ist.

3. Luftreifen nach Anspruch 1 oder 2, dessen Kautschuk-Komponente aus 49 bis 90 Gew.-Teilen des ersten Styrol/Butadien-Copolymeren und 10 bis 40 Gew.-Teilen eines Styrol/Butadien-Copolymeren mit 10 bis 30 Gew.-% gebundenen Styroleinheiten und einem 1,2-Bindungsanteil im Butadienteil von weniger als 35 Gew.-% sowie 0 bis 50 Gew.-Teilen eines Dien-Kautschuks-anders als die Styrol/Butadien-Copolymeren—besteht.

4. Luftreifen nach Anspruch 3, bei dem das andere Styrol/Butadien-Copolymere ein Gewichtsmittel des Molekulargewichts von nicht weniger als $4,0 \times 10^5$ aufweist.

5. Luftreifen nach Anspruch 1 oder 2, bei dem die Kautschuk-Komponente aus 40 bis 90 Gew.-Teilen erstes Styrol/Butadien-Copolymer, 10 bis 50 Gew.-Teilen Polyisoprenkautschuk und/oder Naturkautschuk und 0 bis 40 Gew.-Teilen Polybutadien besteht.

6. Luftreifen nach Anspruch 5, bei dem der Polyisoprenkautschuk einen Anteil an cis-1,4-Bindungen von nicht weniger als 90 Gew.-% aufweist und das Gewichtsmittel des Molekulargewichts nicht unter $1,0 \times 10^6$ liegt.

7. Luftreifen nach einem der vorhergehenden Ansprüche, bei dem das erste Styrol/Butadien-Copolymer nicht weniger als 30 Gew.-% Styrolsequenzen—bezogen auf das Gewicht von gebundenem Styrol—enthält, welche von einem einzigen Monomeren stammen.

# 0 074 233

8. Luftreifen nach einem der vorhergehenden Ansprüche, bei dem der Gehalt an trans-1,4-Bindungen im Butadienteil des ersten Styrol/Butadien-Copolymeren nicht weniger als 20 Gew.-% beträgt.

9. Luftreifen nach einem der vorhergehenden Ansprüche, bei dem die Differenz des Gewichtsanteils der cis-1,4-Bindungen des Butadienteils von dem Anteil an trans-1,4-Bindungen des Butadienanteils des ersten Copolymeren nicht weniger als 5 Gew.-% beträgt.

10. Luftreifen nach einem der vorhergehenden Ansprüche, bei dem im ersten Styrol/Butadien-Copolymeren das Verhältnis von Gewichtsmittel des Molekulargewichts zum Zahlenmittel des Molekulargewichts nicht mehr als 2,5 beträgt.

11. Luftreifen nach einem der vorhergehenden Ansprüche, bei dem das erste Styrol/Butadien-Copolymere mit Hilfe von Zinn(IV)-ionen gekuppelt worden ist.

12. Luftreifen nach Anspruch 11, bei dem zur Kupplung des ersten Copolymeren Zinn(IV)-chlorid verwendet worden ist.

13. Luftreifen nach Anspruch 11 oder 12, bei dem das erste Styrol/Butadien-Copolymer eine Mooney-Viskosität bei 100°C von 45 bis 90 hat.

14. Luftreifen nach einem der Ansprüche 11 bis 13, bei dem der mit Zinn(IV)-ionen gekuppelte Anteil des ersten Styrol/Butadien-Copolymeren 30 bis 75 Gew.-% des SBR-A ausmacht.

15. Luftreifen nach einem der vorhergehenden Ansprüche, bei dem das Vulkanisiermittel Schwefel, p-Chinondioxim, p,p'-Dibenzoylchinondioxim, 4,4'-Dithiodimorpholin, Poly-p-dinitrosobenzol, Ammoniumbenzoat oder Alkylphenoldisulfid ist.

## Revendications

1. Pneumatique comprenant une bande de roulement composée d'une composition de caoutchouc comprenant de 10 à 120 parties en poids de noir de carbone ayant un indice d'absorption d'iode qui n'est pas inférieur à 36 mg/g et un indice d'absorption de phtalate de dibutyle qui n'est pas inférieur à 60 ml/100 g, de 0,4 à 5 parties en poids d'un agent de vulcanisation et 100 parties en poids d'un composant caoutchouteux comprenant de 40 à 100 parties en poids d'un premier copolymère caoutchouteux de styrène-butadiène et de 0 à 60 parties en poids d'un ou plusieurs caoutchoucs diéniques autres que ledit premier copolymère caoutchouteux de styrène-butadiène, le premier copolymère caoutchouteux de styrène-butadiène ayant une teneur en styrène lié (S) de 10 à 30% en poids et une teneur en liaison 1,2 dans la partie butadiène (V) d'environ 40 à 70% en poids de sorte que $65 \leqslant 1,75+V \leqslant 100$ et contenant pas plus de 10% en poids, calculé sur le poids de styrène lié, de séquences de styrène comprenant pas moins de 11 unités monomères de styrène et pas moins de 80% en poids, calculé sur le poids de styrène lié, de séquences de styrène comprenant pas plus de 5 unités monomères de styrène.

2. Pneumatique selon la revendication 1, dans lequel l'autre caoutchouc diénique est un caoutchouc naturel, un caoutchouc de polybutadiène, un caoutchouc synthétique de polyisoprène, un copolymère caoutchouteux de butadiène-acrylonitrile, du butyl-caoutchouc, du butyl-caoutchouc halogéné, un terpolymère caoutchouteux d'éthylène-propylènediène, un copolymère caoutchouteux de nitrile-butadiène ou un copolymère caoutchouteux de styrène-butadiène autre que le premier copolymère caoutchouteux de styrène-butadiène.

3. Pneumatique selon l'une des revendications 1 ou 2, dans lequel le constituant caoutchouteux consiste en 40 à 90 parties en poids du premier copolymère caoutchouteux de styrène-butadiène, en 10 à 40 parties en poids d'un copolymère caoutchouteux de styrène-butadiène ayant une teneur en styrène lié de 10 à 30% en poids et une teneur en liaison 1,2 dans la partie butadiène inférieure à 35% en poids et EN 0 à 50 parties en poids d'un caoutchouc diénique autre que lesdits copolymères caoutchouteux de styrène-butadiène.

4. Pneumatique selon la revendication 3, dans lequel l'autre copolymère caoutchouteux de styrène-butadiène a un poids moléculaire moyen en poids qui n'est pas inférieur à $4,0 \times 10^5$.

5. Pneumatique selon l'une des revendications 1 ou 2 dans lequel le composant caoutchouteux consiste en 40 à 90 parties en poids du premier copolymère caoutchouteux de styrène-butadiène, en 10 à 50 parties en poids d'un caoutchouc de polyisoprène et/ou d'un caoutchouc naturel et en 0 à 40 parties en poids de polybutadiène.

6. Pneumatique selon la revendication 5, dans lequel le caoutchouc de polyisoprène a une teneur en liaison cis-1,4 qui n'est pas inférieure à 90% en poids et un poids moléculaire moyen en poids qui n'est pas inférieur à $1,0 \times 10^6$.

7. Pneumatique selon l'une quelconque des revendications 1 à 6, dans lequel le premier copolymère caoutchouteux de styrène-butadiène ne contient pas moins de 30% en poids, calculé sur le poids du styrène lié, de séquences de styrène consistant en une simple unité monomère de styrène.

8. Pneumatique selon l'une quelconque des revendications 1 à 7, dans lequel la teneur en liaison trans-1,4 dans la partie butadiène du premier copolymère caoutchouteux de styrène-butadiène n'est pas inférieure à 20% en poids.

9. Pneumatique selon l'une quelconque des revendications 1 à 8, dans lequel la valeur obtenue en soustrayant la teneur en pourcentage en poids des liaisons cis-1,4 dans la partie butadiène de la teneur en liaisons trans-1,4 dans la partie butadiène du premier copolymère caoutchouteux de styrène-butadiène n'est pas inférieure à 5% en poids.

**0 074 233**

10. Pneumatique selon l'une quelconque dès revendications 1 à 9 dans lequel le premier copolymère caoutchouteux de styrène-butadiène a un rapport du poids moléculaire moyen en poids au poids moléculaire moyen en nombre qui n'est pas supérieur à 2,5.

11. Pneumatique selon l'une quelconque des revendications 1 à 10 dans lequel le premier copolymère caoutchouteux de styrène-butadiène est couplé à un ion stannique.

12. Pneumatique selon la revendication 11 dans lequel le chlorure stannique est utilisé comme ion stannique.

13. Pneumatique selon l'une des revendications 11 ou 12 dans lequel le premier copolymère caoutchouteux de styrène-butadiène couplé a une viscosité Mooney (à 100°C) de 45 à 90.

14. Pneumatique selon l'une quelconque des revendications 11 à 13 dans lequel la partie couplée d'ion stannique dans le premier copolymère caoutchouteux de styrène-butadiène SBR-A forme de 30 à 75% en poids du SBR-A.

15. Pneumatique selon l'une quelconque des revendications 1 à 14 dans lequel l'agent de vulcanisation est du soufre, de la p-quinonedioxime, de la p,p'-dibenzoylquinonedioxime, de la 4,4'-dithiodimorpholine, du poly-p-dinitrosobenzène, du benzoate d'ammonium ou un disulfure d'alkylphénol.